# EUROPEAN PATENT APPLICATION

(11) **EP 4 563 327 A1**
(43) Date of publication of application: **04.06.2025**
(21) Application number: 23846157.8
(22) Date of filing: 05.07.2023
(51) Int. Cl.: B29C 65/42, B29C 65/64, B32B 15/08, B65H 37/04, C09J 7/30, C09J 163/00, C09J 171/10

(54) **CONNECTED BODY OF METAL MATERIALS AND METHOD FOR CONNECTING METAL MATERIALS**

(30) Priority: 27.07.2022 JP 2022119867
(71) Applicant: Resonac Corporation, Tokyo 105-7325 (JP)
(72) Inventor: TAKAHASHI, Nobuyuki, Tokyo 105-7325 (JP); SAITO, Hayato, Tokyo 105-7325 (JP)
(74) Representative: Strehl & Partner mbB
(86) International application number: PCT/JP2023/024871
(87) International publication number: WO 2024/024424

(57) **Abstract**

A metal material connecting body, wherein a flat plate-like metal material B is connected with a flat plate-like metal material A by butting a cross section B of the metal material B against a cross section A of the metal material A, and covering at least a part of an opposing portion, which is a region spanning both an end edge portion A of the metal material A and an end edge portion B of the metal material B, with a film including a layer containing a thermoplastic resin as a main component, wherein the film is a film that has undergone melting and solidification at the opposing portion.

## Description

### Technical Field

The present invention relates to a metal material connecting body in which a cross section of a metal material is butted and connected to a cross section of another metal material, and a metal material suitable for an application of butting to connect a cross section of a metal material to a cross section of another metal material and a connecting method thereof.

As used herein, "end edge portion" refers to a flat surface portion on at least one of a front or back side near the end of a metal material to be connected.

As used herein, "opposing portion" is a region spanning the above-described "end edge portions", and refers to both the flat surface portion on the front side and the flat surface portion on the back side of the metal material.

As used herein, "cross section" is not limited to a cut surface, and "a cross section of a metal material is butted against a cross section of another metal material" also includes a mode of butting a terminal end or a starting end of a metal material that does not have a cut surface through cutting.

As used herein, "butting" means "to face against", and is not limited to a mode in which an entire face is brought into contact with and made to face another object.

### Background Art

In a roll-to-roll manufacturing apparatus that conveys and continuously processes a rolled metal plate and/or metal foil (hereinafter referred to as "roll material"), in order to carry out continuous operation, it is necessary to connect a new roll material to the old roll material during continuous processing when the amount of the roll material becomes low or when there is a break in the roll material.

As a technique for connecting the starting end of a band-shaped metal material to the terminal end of another band-shaped metal material, a joining method has been disclosed in which a backing material is placed on the back side of a butt portion where the ends are to be butted together, and an arc welding torch is applied from the front side of this butt portion to join the butt portions by welding (Patent Literature 1).

However, the technology of Patent Literature 1 relates to connection by welding joining, and after connecting, the connected body cannot be dismantled without breaking. For this reason, there is a problem in that it is not possible to easily reconnect them (hereinafter also referred to as repairing) in the case of a failure such as a misalignment of the connection location.

Examples of connection means other than welding include connection using a liquid type adhesive, connection using a film-like thermosetting type adhesive (hereinafter referred to as thermosetting adhesive film), connection using a pressure-sensitive adhesive tape, and connection using caulking. However, those connection means respectively have the following problems.

Using a liquid type adhesive to perform connection requires a coating step of coating a liquid thermosetting resin composition, and a curing step of curing the resin composition through a polymerization reaction after coating. In the coating step, it takes time to coat the resin composition, and in the curing step, it takes time to perform the polymerization reaction. Thus, using a liquid type adhesive to perform connection involves a long process time to achieve the connection, and so there is a problem in that this method lacks convenience. Further, in the case of a liquid thermosetting type adhesive, repairing is either not possible or is difficult.

In the case of using a thermosetting adhesive film to perform connection, there is no need for a coating step, and so the process time can be shortened, but repairing cannot be performed after connecting.

When the thermosetting adhesive film is a B-stage film, the polymerization reaction easily proceeds at ordinary temperature, and so storage stability is poor and long-term storage at ordinary temperature is not possible. That is, when the thermosetting adhesive film is a B-stage film, the adhesive film needs to be stored at a low temperature, and so a low-temperature storage facility is required, making it difficult to store the adhesive film in large quantities for a long period of time, and thus lacking in convenience.

In the case of using a pressure-sensitive adhesive tape to perform connection, there is a problem in that the pressure-sensitive adhesion component (hereinafter referred to as pressure-sensitive adhesion object) such as matrix resin or a tackifier, which are resin compositions that constitute the pressure-sensitive adhesion layer of the pressure-sensitive adhesive tape adheres to a conveyance path or mold on the production line, thereby contaminating the conveyance path and mold. Further, if the pressure-sensitive adhesive tape is peeled off due to an accident, the pressure-sensitive adhesion layer of the peeled pressure-sensitive adhesive tape may be exposed, and the pressure-sensitive adhesion object may contaminate the conveyance path and mold.

In the case of connection by caulking, the metal materials are overlapped in order to perform caulking, and thus protrusions are created by the caulking. For this reason, because the thickness increases at the caulked portion, which is the connection portion, there is a problem in that it is difficult to apply caulking in a low-profile manufacturing line. Further, in order to perform caulking, a flat metal material space that is larger than the caulking diameter is required, and there is a problem in that a sufficient connection strength cannot be obtained for metal materials having a complicated shape or a narrow pitch. Moreover, in the case of passing a chemical liquid through a plurality of tanks, a larger amount of chemical liquid is carried into the next tank, which leads to further contamination of the chemical liquid, resulting in a problem in that the life of the chemical liquid is shortened.

### Citation List

### Patent Literature

PTL1: JP 2012-61511 A

### Summary of Invention

### Technical Problem

The present invention has been made in view of the above technical background, and it is an object of the present invention to provide a connection technique that allows repairing to be made, has a short process time, does not involve a risk of contamination of the production line due to the pressure-sensitive adhesion component, and has little thickness change at the connection portion.

### Solution to Problem

In order to achieve the above object, the present invention provides the following means.

### <Metal material connecting body>

[1] A metal material connecting body, wherein a flat plate-like metal material B is connected with a flat plate-like metal material A by butting a cross section B of the metal material B against a cross section A of the metal material A, and covering at least a part of an opposing portion, which is a region spanning both an end edge portion A of the metal material A and an end edge portion B of the metal material B, with a film including a layer containing a thermoplastic resin as a main component, wherein
   the film is a film that has undergone melting and solidification at the opposing portion.
[2] The metal material connecting body according to [1], wherein the metal material A and the metal material B are each at least one selected from the group consisting of a metal plate having a thickness of 1 mm or less and a metal foil having a thickness of 1 mm or less.
[3] The metal material connecting body according to [1] or [2], wherein the metal material A and the metal material B each have a band-like shape, and the metal material A and the metal material B are butted against each other so as to be continuous in the longitudinal direction.
[4] The metal material connecting body according to any of [1] to [3], wherein the metal material A and the metal material B are roll materials obtained by winding at least one material selected from the group consisting of a metal plate and a metal foil into a roll shape.
[5] The metal material connecting body according to any of [1] to [4], wherein the connecting body is formed by performing the covering at both a flat surface portion on a front side of each of the metal material A and the metal material B and a flat surface portion on a back side of each of the metal material A and the metal material B.
[6] The metal material connecting body according to any of [1] to [5], wherein the thermoplastic resin is an amorphous thermoplastic resin.
[7] The metal material connecting body according to [6], wherein the amorphous thermoplastic resin is at least one of a thermoplastic epoxy resin and a phenoxy resin.
[8] The metal material connecting body according to [7], wherein the amorphous thermoplastic resin is an amorphous thermoplastic resin having an epoxy equivalent weight of 1,600 or more, or is an amorphous thermoplastic resin that does not contain an epoxy group.
[9] The metal material connecting body according to any of [1] to [8], wherein the film has a thickness of from 10 µm to 3 mm.
[10] The metal material connecting body according to any of [1] to [9], wherein
   the film has a pressure-sensitive adhesion object on a face covering the opposing portion, and
   the pressure-sensitive adhesion object performs as a function of temporarily fixing of the film, and does not perform an adhesion function.

### <Metal material connecting method>

[11] A metal material connecting method including butting a cross section B of a flat plate-like metal material B against a cross section A of a flat plate-like metal material A, covering at least a part of an opposing portion, which is a region spanning both an end edge portion A of the metal material A and an end edge portion B of the metal material B, with a film including a layer containing a thermoplastic resin as a main component, and melting and solidifying the film to connect the metal material B with the metal material A.
[12] The metal material connecting method according to [11], wherein the metal material A and the metal material B are each at least one selected from the group consisting of a metal plate having a thickness of 1 mm or less and a metal foil having a thickness of 1 mm or less.
[13] The metal material connecting method according to [11] or [12], wherein the metal material A and the metal material B each have a band-like shape, and the metal material A and the metal material B are butted against each other so as to be continuous in the longitudinal direction.
[14] The metal material connecting method according to any of [11] to [13], wherein the metal material A and the metal material B are roll materials obtained by winding at least one material selected from the group consisting of a metal plate and a metal foil into a roll shape.
[15] The metal material connecting method according to any of [11] to [14], wherein the covering is carried out at both a flat surface portion on a front side of each of the metal material A and the metal material B and a flat surface portion on a back side of each of the metal material A and the metal material B.
[16] The metal material connecting method according to any of [11] to [15], wherein the thermoplastic resin is an amorphous thermoplastic resin.
[17] The metal material connecting method according to [16], wherein the amorphous thermoplastic resin is at least one selected from the group consisting of a thermoplastic epoxy resin and a phenoxy resin.
[18] The metal material connecting method according to [17], wherein the amorphous thermoplastic resin is an amorphous thermoplastic resin having an epoxy equivalent weight of 1,600 or more, or is an amorphous thermoplastic resin that does not contain an epoxy group.
[19] The metal material connecting method according to any of [11] to [18], wherein the film has a thickness of from 10 µm to 3 mm.
[20] The metal material connecting method according to any of [11] to [19], wherein
   the film has a pressure-sensitive adhesion object on a face covering the opposing portion, and
   the pressure-sensitive adhesion object performs as a function of temporarily fixing of the film, and does not perform an adhesion function.

### Advantageous Effects of Invention

A connection technique can be provided that has a short process time, allows repairing to be made, does not involve a risk of contamination of the production line due to a pressure-sensitive adhesion component, and has little thickness change at the connection portion.

### Brief Description of Drawings

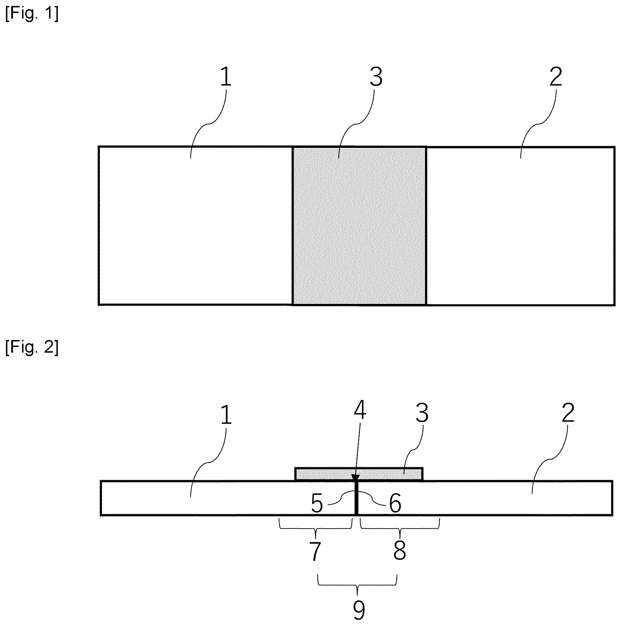

[Fig. 1] Fig. 1 is a schematic plan view of a metal material connecting body according to an embodiment of the present invention, in which the connecting body is joined by butting a cross section of a flat plate-like metal material A and a cross section of a flat plate-like metal material B, which both have a band-shape, in the width direction thereof.
[Fig. 2] Fig. 2 is a schematic front view of a metal material connecting body according to an embodiment of the present invention, in which the connecting body is joined by butting a cross section of a flat plate-like metal material A and a cross section of a flat plate-like metal material B, which both have a band-shape, in the width direction thereof.

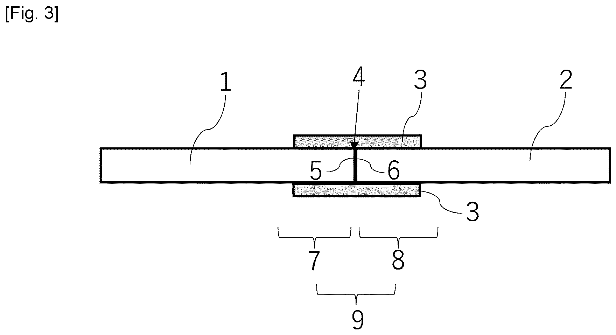

[Fig. 3] Fig. 3 is a schematic front view of a metal material connecting body according to another embodiment of the present invention, in which the connecting body is joined by butting a cross section of a flat plate-like metal material A and a cross section of a flat plate-like metal material B, which both have a band-shape, in the width direction thereof.

### Description of Embodiments

Hereinafter, embodiments of the present invention will be described in detail.

As used herein, "connect" means to link two things to form a continuous body, and "join" is a subordinate concept thereof. As used herein, "join" means linking together two objects so that they are in contact with each other, and adhere and weld are subordinate concepts thereof. Adhere means bringing two adherends (the objects to be adhered) into a joined state via an organic material (thermosetting resin, thermoplastic resin, etc.) such as a tape or an adhesive. Weld means to melt the surface of a thermoplastic resin or the like by heat and cooling to cause entanglement through molecular diffusion to create a joined state.

### [Metal material connecting body]

The metal material connecting body of the present invention is a metal material connecting body in which a flat plate-like metal material B (2) is connected with a flat plate-like metal material A (1) by butting a cross section B (6) of the metal material B (2) against a cross section A (5) of the metal material A (1), and covering at least a part of an opposing portion (9), which is a region spanning both an end edge portion A (7) of the metal material A (1) and an end edge portion B (8) of the metal material B (2), with a film (3) including a layer containing a thermoplastic resin as a main component, wherein the film (3) is a film that has undergone melting and solidification at the opposing portion (9).

As used herein, "main component" means the component with the highest content among the resin components of the film. The film preferably contains 50% by mass or more of resin components, more preferably 70% by mass or more, further preferably 80% by mass or more, and particularly preferably 90% by mass or more.

By melting and solidifying the film (3) at the opposing portion (9), the film (3) and the end edge portion A (7) of the metal material A (1) join each other, and the film (3) and the end edge portion B (8) of the metal material B (2) join each other, respectively, so that the metal material A and the metal material B are connected, and a connecting body exhibiting excellent connection strength is obtained.

If the film (3) melted at the opposing portion (9) enters a gap between the cross section A (5) of the metal material A (1) and the cross section B (6) of the metal material B (2) and solidifies, a connecting body is obtained that is joined at an abutting face (4) between the cross section A (5) and the cross section B (6), whereby even better connection strength is exhibited, and so in the connecting body of the present invention, there may be a gap between the cross section A (5) and the cross section B (6).

The connection strength is influenced by, in addition to the strength from the interfacial interaction between the film and the metal material, many other factors, including the thickness of the film, the molecular weight and chemical structure of the polymers constituting the film, mechanical properties, and viscoelastic properties. Therefore, although the details of the mechanism by which the connecting body of the present invention exhibits excellent connection strength are not entirely clear, it is thought that the main factor is the formation of chemical bonds and intermolecular forces such as hydrogen bonds and van der Waals forces at the interface between the film and metal material A and the interface between the film and the metal material B. However, in the connecting body, since the state or the characteristics of the interface between the film and the metal materials are identified by analyzing the chemical structure of a very thin interface at the nanometer level or smaller, it is impossible or impractical with the current state of the art to express such distinctions by specifying strict numerical ranges.

At present, it is difficult to strictly distinguish, through analysis and the like, between a connecting body connected by a film (3) that has undergone melting and solidification at the opposing portion (9) and a connecting body connected by a pressure-sensitive adhesive tape. In terms of current technology, as described above, such a distinction is difficult, but in practice, as described below, such connecting bodies are distinguished by the presence or absence of roundness at the corners of the film, the presence or absence of variations in thickness, and the surface properties of the film surface in contact with the end edge portion.

A film before melting and solidification has sharp cut faces formed during the production process of the film, but since the film (3) constituting the metal material connecting body of the present invention has undergone melting and solidification at the opposing portion (9), it does not have the sharp cut faces formed during the film production process, and the corners of the film are presumed to be rounded.

Films are usually manufactured to have a uniform thickness, so there is no variation in thickness in the film before melting and solidification. However, since the film (3) constituting the metal material connecting body of the present invention has undergone melting and solidification at the opposing portion (9), it is presumed that there will be variations in thickness that inevitably occur during the melting and solidification process. Any suitable method may be used to measure the thickness variation, such as measuring the thickness at any of a plurality of points within the plane of a measurement target and performing statistical processing. Examples of the method for measuring such thickness include methods that involve physical contact, such as using a micrometer, micro calipers, or a dial gauge; non-contact methods measuring the transmittance or reflectance of α-rays, X-rays, infrared rays, electromagnetic waves, and the like for a measurement target; a method of cutting a measurement target at an arbitrary measurement point and observing with an optical microscope or an electron microscope; and the like, and combinations of these methods may also be employed.

The film (3) that has undergone melting and solidification at opposing portion (9) is presumed to have the surface properties of the end edge portion A (7) transferred onto the film surface in contact with end edge portion A (7), and to have the surface properties of the end edge portion B (8) transferred onto the film surface in contact with end edge portion B (8). Here, "surface properties" refers to the fine irregularities that have been created on the surface of a metal material during processes such as the machining of the metal material.

The connection of the present invention utilizes phase changes (solid to liquid to solid) of a film having a thermoplastic resin as a main component, and is a connection that does not involve a chemical reaction such as a polymerization reaction. Since the film is used in a state in which the polymerization reaction has been completed, a polymerization reaction does not proceed even at ordinary temperature, and so the film can be stored for a long time at ordinary temperature. The film can be softened and melted by heat and can be easily peeled off, and disassembly properties are excellent. Further, since a film having a thermoplastic resin as a main component has thermoplastic properties, the softening, melting, and solidification of the film are reversible, and can be carried out repeatedly, meaning that the film has excellent repairability. The connection using a film having a thermoplastic resin as a main component takes advantage of phase changes (from solid to liquid to solid) of the film, requiring less time than a polymerization reaction, which involves the formation of chemical bonds, and thus has the advantage of having a short process time. In addition, thermoplastic resins are not liquids at ordinary temperature, they are solids in which a polymerization reaction has been completed, and so adhesion occurs through a mechanism different from pressure-sensitive adhesion. Therefore, there is no need to use a pressure-sensitive adhesion object for the purpose of adhesion, and there is no risk of contaminating the production line with a pressure-sensitive adhesion object. Moreover, since the polymerization reaction has been completed, the film also has excellent heat resistance and chemical resistance. In addition, because the connection uses a thin film, there is the advantage that there is less thickness change at the connection portion compared to caulking and the like.

Fig. 1 to Fig. 3 are schematic diagrams of a connecting body in which a flat plate-like metal material A (1) and a flat plate-like metal material B (2) are joined by butting a cross section of each of them in the width direction when both are band-shaped.

As shown in Fig. 2, it is preferable that the film cover the metal material A (1) and the metal material B (2) at the opposing portion (9) at the flat surface portion of at least one of a flat surface portion on the front side of the metal material A and the metal material B and a flat surface portion on the back side of the metal material A and the metal material B.

As shown in Fig. 3, it is particularly preferable that the film cover the metal material A (1) and the metal material B (2) at the opposing portion (9) at the flat surface portion of both a flat surface portion on the front side of the metal material A and the metal material B and a flat surface portion on the back side of the metal material A and the metal material B.

### <Metal material>

The shapes of the metal material A and the metal material are not particularly limited as long as they are flat plate-like, but the present invention is suitable for connecting metal plates with a thickness of 1 mm or less or metal foils with a thickness of 1 mm or less, and can be preferably used in applications in which the metal material A and the metal material B are both band-shaped (elongated) and opposing portions that are continuously facing each other in the longitudinal direction are connected. Specifically, the present invention can be preferably used for connecting roll materials in which metal foil is wound into a roll, and is particularly preferably used for connecting a terminal end of a preceding roll material being fed into a production line with a starting end of a following roll material and connecting a terminal end with a start end when there is a break in the roll material in the roll.

As used herein, "metal foil" refers to a highly malleable metal that has been stretched into a thin paper shape.

The types of the metal of the metal material A and the metal material B are also not particularly limited, but the metal materials A and B are preferably at least one selected from the group consisting of aluminum, iron, copper, magnesium, and alloys thereof, and from the viewpoint of the strength of the interfacial adhesive force with the film, the metal materials are particularly preferably at least one selected from the group consisting of an aluminum alloy and an iron alloy because a strong connection can be realized.

Further, the surface of the metal material A or the metal material B may be plated with a metal, or may be covered with a resin.

By pre-treating of the metal material A and the metal material B, the opposing portion to be covered with a film, a high adhesive force may be obtained between the film and the metal materials. Preferably, the pretreatment is a treatment of cleaning the surface of the metal material or a treatment of making the surface uneven. When the metal material is composed of aluminum or iron, at least one pretreatment selected from the group consisting of a degreasing treatment, a UV ozone treatment, a blasting treatment, a polishing treatment, a plasma treatment, and an etching treatment is preferable.

Only one kind of pretreatment may be performed, or two or more types of pretreatment may be performed. As specific methods for these pretreatments, known methods can be used.

### <Film>

As used herein, "film" means a thin film made of a resin having a thermoplastic resin as a main component, or a thin film of a resin composition having a thermoplastic resin as a main component.

In order to sufficiently impart the characteristics of the thermoplastic resin to the film, the content of the thermoplastic resin is, based on the resin components in the film, preferably 60% by mass or more, more preferably 70% by mass or more, further preferably 80% by mass or more, and most preferably 90% by mass or more.

The thermoplastic resin is preferably an amorphous thermoplastic resin. In this embodiment, "amorphous thermoplastic resin" means a resin in which crystals are not present, or even if crystals are present, the content thereof is very small, specifically, a resin having a heat of fusion of crystals of 15 J/g or less.

The heat of fusion is calculated from the area of the endothermic peak from a DSC (differential scanning calorimeter) and the weight of the thermoplastic resin component. If an inorganic filler or the like is included in the film, the heat of fusion is calculated from the weight of the thermoplastic resin component excluding the inorganic filler. Specifically, 2 to 10 mg of a sample is weighed, placed in an aluminum pan, and heated from 23°C to 200°C or higher at 10°C/min using a DSC (DSC8231, manufactured by Rigaku Co., Ltd.) to obtain a DSC curve. The heat of fusion can then be calculated from the area of the endothermic peak during melting determined from the DSC curve and the weighed value.

The heat of fusion of the amorphous thermoplastic resin is more preferably 11 J/g or less, further preferably 7 J/g or less, still further preferably 4 J/g or less, and most preferably is where the melting peak is equal to or below the detection limit.

A film having an amorphous thermoplastic resin with a heat of fusion of 15 J/g or less as a main component does not suffer from the rapid viscosity drop seen in conventional hot melt adhesives when heated to melt, and does not reach a low viscosity (0.001 to 100 Pa·s) state even in a high temperature region exceeding 200°C. Therefore, the film does not melt and flow out, thickness after solidification can be maintained within a predetermined range, and a high connecting force can be stably obtained.

When the amorphous thermoplastic resin that is the main component of the film contains a small amount of crystals, the melting point of the amorphous thermoplastic resin is preferably from 50°C to 400°C, more preferably from 60°C to 350°C, and further more preferably from 70°C to 300°C. By having a melting point in the range of 50°C to 400°C, a high connecting force can be obtained because the film is efficiently deformed and melted by heating, and effectively wets and spreads onto the joining face between the film and the metal material A and the joining face between the film and the metal material B.

As used herein, "the melting point of the thermoplastic resin" means the melting peak temperature measured by DSC. In addition, when a melting peak is not obtained or when the heat of fusion is 15 J/g or less, the melting point is defined as the temperature obtained by adding 70°C to the glass transition point. The glass transition point means the temperature at which the DSC curve starts to fall in the second cycle of raising the temperature to 200°C with a DSC, then cooling to 40°C or less, and again raising to 200°C.

The amorphous thermoplastic resin is preferably at least one selected from the group consisting of a thermoplastic epoxy resin and a phenoxy resin. Thermoplastic epoxy resins and phenoxy resins have low cohesive force within the resin, and thus have a strong interaction with metal materials and can connect metal materials with a higher connecting force than conventional crystalline hot melt adhesives. Further, since thermoplastic epoxy resins and phenoxy resins have excellent flexibility and toughness, a high-strength connection can be obtained.

It is preferable that the amorphous thermoplastic resin has an epoxy equivalent weight of 1,600 or more or does not contain an epoxy group.

The epoxy equivalent weight (the weight of the thermoplastic resin included in 1 mole of epoxy groups) is the value of the epoxy equivalent weight of the thermoplastic resin contained in the film before connection, and is the value (unit: "g/eq. ") measured by the method specified in JIS-K7236:2001. Specifically, using a potentiometric titration device, the epoxy equivalent weight is a value calculated from a numerical value converted as resin solid content from the non-volatile component of a solvent-diluted product (resin varnish) obtained by adding a brominated tetraethylammonium acetic acid solution and using a 0.1 mol/L perchloric acid-acetic acid solution. **In** addition, in the case of a mixture of two or more resins, the epoxy equivalent weight can also be calculated from the content and epoxy equivalent weight of each resin.

The epoxy equivalent weight of the amorphous thermoplastic resin is more preferably 2,000 or more, further preferably 5,000 or more, still further preferably 9,000 or more, and most preferably is when the epoxy equivalent weight is equal to or higher than the detection limit and substantially no epoxy groups are detected. It is noted that "the epoxy equivalent weight is equal to or higher than the detection limit" means that no epoxy groups are detected when the epoxy equivalent weight is measured based on JIS K 7236:2001, which will be described later.

The use of a film having an amorphous thermoplastic resin with an epoxy equivalent weight of 1,600 or more as a main component enables a rapid viscosity reduction to be more effectively suppressed and a higher connecting force can be stably obtained.

### <<Thermoplastic epoxy resin>>

The thermoplastic epoxy resin is preferably a polymer of (a) a bifunctional epoxy resin monomer or oligomer and (b) a bifunctional compound having two identical or different functional groups selected from the group consisting a phenolic hydroxyl group, a carboxy group, a mercapto group, an isocyanato group, and a cyanate ester group.

By using such a compound, the polymerization reaction to form a linear polymer proceeds preferentially, making it possible to obtain a thermoplastic epoxy resin having desired properties.

The above "(a) bifunctional epoxy resin monomer or oligomer" refers to an epoxy resin monomer or oligomer having two epoxy groups in the molecule.

Specific examples of the above (a) include a bisphenol A type epoxy resin, a bisphenol F type epoxy resin, a bifunctional phenol novolac type epoxy resin, a bisphenol AD type epoxy resin, a biphenyl type epoxy resin, a bifunctional naphthalene type epoxy resin, a bifunctional alicyclic epoxy resin, a bifunctional glycidyl ester type epoxy resin (e.g. diglycidyl phthalate, diglycidyl tetrahydrophthalate, dimer acid diglycidyl ester, etc.), a bifunctional glycidylamine type epoxy resin (e.g. diglycidyl aniline, diglycidyl toluidine, etc.), a bifunctional heterocyclic epoxy resin, a bifunctional diarylsulfone type epoxy resin, a hydroquinone type epoxy resin (e.g. hydroquinone diglycidyl ether, 2,5-di-tert-butylhydroquinone diglycidyl ether, resorcin diglycidyl ether, etc.), a bifunctional alkylene glycidyl ether compound (e.g., butanediol diglycidyl ether, butenediol diglycidyl ether, butynediol diglycidyl ether, etc.), a bifunctional glycidyl group-containing hydantoin compound (e.g., 1,3-diglycidyl-5,5-dialkylhydantoin, 1-glycidyl-3-(glycidoxyalkyl)-5,5-dialkylhydantoin, etc.), a bifunctional glycidyl group-containing siloxane (e.g. 1,3-bis(3-glycidoxypropyl)-1,1,3,3-tetramethyldisiloxane, α, β-bis(3-glycidoxypropyl)polydimethylsiloxane, etc.) and modified products thereof. Among these, from the viewpoint of reactivity and workability, a bisphenol A type epoxy resin, a bisphenol F type epoxy resin, and a biphenyl type epoxy resin are preferable.

Examples of (b) a bifunctional compound having a phenol hydroxyl group include mononuclear aromatic dihydroxy compounds having one benzene ring such as catechol, resorcinol, and hydroquinone, bisphenols such as bis(4-hydroxyphenyl)propane (bisphenol A), bis(4-hydroxyphenyl)methane (bisphenol F), and bis(4-hydroxyphenyl)ethane (bisphenol AD), compounds having a condensed ring such as dihydroxynaphthalene, bifunctional phenol compounds into which an allyl group has been introduced such as diallyl resorcinol, diallyl bisphenol A, and triallyl dihydroxybiphenyl, dibutylbisphenol A, and the like.

Specific examples of (b) a carboxy group-containing compound include adipic acid, succinic acid, malonic acid, cyclohexanedicarboxylic acid, phthalic acid, isophthalic acid, terephthalic acid, and the like.

Examples of (b) a bifunctional compound having a mercapto group include ethylene glycol bisthioglycolate, ethylene glycol bisthiopropionate, and the like.

Specific examples of (b) a bifunctional compound containing an isocyanate group include diphenylmethane diisocyanate (MDI), isophorone diisocyanate (IPDI), hexamethylene diisocyanate (HMDI), tolylene diisocyanate (TDI), and the like.

Specific examples of (b) a bifunctional compound containing a cyanate ester group include 2,2-bis(4-cyanatophenyl)propane, 1,1-bis(4-cyanatophenyl)ethane, bis (4-cyanatophenyl)methane, and the like.

Among the above (b), a bifunctional compound having a phenol hydroxyl group is preferable from the viewpoint of obtaining a thermoplastic polymer, a bifunctional compound having two phenolic hydroxyl groups and a bisphenol structure or a biphenyl structure is preferable from the viewpoint of heat resistance and connection properties, and at least one selected from the group consisting of bisphenol A, bisphenol F, and bisphenol S is preferable from the viewpoint of heat resistance and cost.

When (a) is a bisphenol A type epoxy resin, a bisphenol F type epoxy resin, a bisphenol S type epoxy resin, or a biphenyl type epoxy resin, and (b) is at least one selected from the group consisting of bisphenol A, bisphenol F, and bisphenol S, the polymer obtained by polymerizing (a) and (b) has a structure with a paraphenylene structure and an ether bond as a main skeleton, the paraphenylene structure and the ether bond are connected in the main chain by an alkylene group, and a hydroxyl group produced by polyaddition is arranged in a side chain.

The linear structure composed of a paraphenylene skeleton can increase the mechanical strength of the polymer after polymerization, and the hydroxyl group arranged in a side chain can improve adhesion to the metal materials. As a result, a high connection strength can be achieved while maintaining the adhesiveness of the thermosetting resin. Further, in the case of a thermoplastic resin, the resin can be recycled and repaired by softening and melting with heat, and which enables recyclability and repairability, which are problems with thermosetting resins, to be improved.

### <<Phenoxy resin>>

The phenoxy resin is a polyhydroxy polyether synthesized from a bisphenol and epichlorohydrin, and has thermoplasticity. To produce the phenoxy resin, methods that employ a direct reaction between a dihydric phenol and epichlorohydrin and methods that employ an addition polymerization reaction between a diglycidyl ether of a dihydric phenol and a dihydric phenol are known, and the phenoxy resin used in the present invention may be obtained by either of those production methods. In the case of a direct reaction between a dihydric phenol and epichlorohydrin, examples of the dihydric phenol include phenols such as bisphenol A, bisphenol F, bisphenol S, biphenol, biphenylene diol, and fluorenediphenyl; and aliphatic glycols such as ethylene glycol, propylene glycol, and diethylene glycol. Among them, bisphenol A, bisphenol F, and bisphenol S are preferable from the viewpoint of cost, connection properties, viscosity, and heat resistance. They may be used alone or in combination of two or more.

The phenoxy resin has a chemical structure similar to that of the epoxy resin, with a paraphenylene structure and an ether bond as a main skeleton, the paraphenylene structure and the ether bond are connected in the main chain, and a hydroxyl group is arranged in a side chain.

### <<Physical properties of thermoplastic epoxy resin and phenoxy resin>>

The thermoplastic epoxy resin and phenoxy resin have a weight average molecular weight, which is a polystyrene-converted value measured by GPC (gel permeation chromatography), of preferably from 10,000 to 500,000, more preferably from 18,000 to 300,000, and further preferably from 20,000 to 200,000. The weight average molecular weight is calculated from the elution peak position detected by GPC, and is the value of the molecular weight in terms of standard polystyrene. When the weight average molecular weight is within this range, there is a good balance between thermoplasticity and heat resistance, the connecting body can be efficiently obtained by melting, and the heat resistance of the connecting body is also high. When the weight average molecular weight is 10,000 or more, heat resistance is excellent, and when the weight average molecular weight is 500,000 or less, the viscosity when melted is low and the connection properties are better.

### <<Components other than resin components in the film>>

The film may or may not contain a filler and additives as components other than the resin component, as required, within a range that does not interfere with the object of the present invention.

### Examples of the filler include inorganic fillers and organic fillers (resin powders).

Examples of inorganic fillers include spherical fused silica, metal powders of a metal such as iron, silica sand, talc, calcium carbonate, mica, acid clay, diatomaceous earth, kaolin, quartz, titanium oxide, silica, phenolic resin microballoons, glass balloons, and the like.

When the film contains a filler, the content of the filler based on 100% by volume of the total amount of the film is preferably 50% by volume or less, more preferably 30% by volume or less, further preferably 20% by volume or less, and most preferably 10% by volume or less. The volume of the filler can be determined by dividing the weight of the filler contained in the film by the apparent specific gravity of the filler.

The content of the resin component in 100% by volume of the total amount of the film is preferably 10% by volume or more, more preferably 20% by volume or more, further preferably 30% by volume or more, and still further preferably 50% by volume or more, and in one embodiment is 80% by volume or more, in another embodiment 90% by volume or more, and in another embodiment 99% by volume or more.

Examples of additives include an antifoaming agent, a coupling agent such as a silane coupling agent, pigments, and the like, and one or more of these may be contained.

The content of the additives in the film is preferably 10% by mass or less, more preferably 5% by mass or less, and further preferably 1% by mass or less.

The content of the resin component in the film is preferably 10% by mass or more, more preferably 20% by mass or more, further preferably 30% by mass or more, and still further preferably 50% by mass or more, and in one embodiment is 80% by mass or more, in another embodiment 90% by mass or more, and in another embodiment 99% by mass or more.

### <<Film form and physical properties>>

The film preferably has a thickness of from 10 µm to 3 mm.

From the viewpoint of obtaining a connecting body having excellent connection properties with a short process time, the thickness of the film is preferably 1 mm or less, more preferably 0.5 mm or less, further preferably 0.3 mm or less, particularly preferably 0.2 mm or less, and most preferably 0.1 mm or less.

By setting the film to a thickness of from 10 µm to 3 mm, the film can be efficiently spread by heating, applying pressure, and the like onto each of the joining face between the film and the metal material A and the joining face between the film and the metal material B, and a high connecting force can be obtained.

The film may be a single layer or a laminate composed of a plurality of layers, but from the viewpoint of ease of production and improvement of connecting force, it is preferable that the thermoplastic resin layer is a single layer. Alternatively, the thermoplastic resin may be laminated in a plurality of layers on a film base material made of a resin having a melting point higher than that of the resin composition. In such a case, the resin film base material is not melted when heat welded to the metal base material and the thickness of the resin film base material remains, and thus a good connecting force can be maintained.

Further, the film may have tackiness as long as the connecting force or heat resistance of the film are not hindered.

The tackiness may be imparted by mixing a tackifier with the thermoplastic resin, or by coating a pressure-sensitive adhesion object on the film. It is preferable that the pressure-sensitive adhesion object perform a function of temporarily fixing of the film, and does not perform an adhesion function. A pressure-sensitive adhesion object that performs as a function of temporarily fixing of the film but does not perform an adhesion function is, for example, a pressure-sensitive adhesion object that remains within the face of the film covering the opposing portion (9) and is not exposed on the outside of the face.

The pressure-sensitive adhesion object may be coated on the entire face covering the opposing portion (9), or may be coated on a part of the face covering the opposing portion (9) in the form of stripes, dots, a grid, tiles (a plurality of squares arranged in lines with gaps between them), or the like. The smaller the coating area, the lower the tackiness, but a smaller coating area can reduce the risk of the pressure-sensitive adhesion object being exposed to the outside from the edge face of the film after connection and causing contamination.

In a conventional pressure-sensitive adhesive tape, the joining force between the metal material and the film is provided based only on the adhesive properties of the pressure-sensitive adhesion layer of the pressure-sensitive adhesive tape, but in the case of the above-described thermoplastic film, the joining force is provided by the adhesion resulting from melting and solidification of a thermoplastic resin as described above, and therefore the tackiness is preferably at a level such that the above temporary fixing function can be performed. That is, when the film is placed on the metal material, it is not necessary for the film to stick to the metal material, and it is sufficient that the resistance increases (slipping becomes more difficult) when a force in the shearing direction is applied.

When the purpose is to provide tackiness sufficient to perform a temporary fixing function, it is preferable to suppress the coating amount of the pressure-sensitive adhesion object to the minimum amount that can temporarily hold (prevent slipping) the film.

With a conventional pressure-sensitive adhesive tape, which has a pressure-sensitive adhesion layer on only one side, after joining the metal material, the pressure-sensitive adhesion layer is generally not exposed on the outside of the joining face, but if there is a location where the pressure-sensitive adhesion layer protrudes from the end of the joining face, the pressure-sensitive adhesion object may adhere to the conveyor path or mold of the production line, causing contamination.

Further, the end face of a band-shaped metal material is not necessarily a straight line, and in such a case, a gap forms between the end surfaces of the two pieces of metal material that are to be connected. When a pressure-sensitive adhesive tape pasted on the gap portion, the pressure-sensitive adhesion layer is exposed from the gap portion, and the pressure-sensitive adhesion object may adhere to the conveyor path or mold of the production line, causing contamination.

In addition, when superposed on a base material via a single-sided pressure-sensitive adhesive tape, the pressure-sensitive adhesion portion is less exposed, but it is difficult to completely align both the back and front surfaces. Moreover, in the case of butting, the shape of the end face may be irregular, and so the pressure-sensitive adhesion layer may be exposed at that part. As a result, the pressure-sensitive adhesion object may adhere to the conveyor path or mold of the production line, causing contamination.

According to the present invention, in which the joining force is provided through adhesion by melting and solidifying a thermoplastic resin, a pressure-sensitive adhesion object for joining purposes is basically unnecessary, and the use of a pressure-sensitive adhesive for purposes such as positioning may be kept to a minimum. As a result, all of the problems described above with conventional pressure-sensitive adhesive tapes can be avoided.

The breaking strength of the film in the connecting body of the metal material A and the metal material B connected by the film is preferably from 20 to 1,000 N/25 mm. If the connecting body is connected by two films on the front and back, this strength refers to when the film first breaks.

The breaking strength of the film in the connecting body is more preferably from 50 to 1,000 N/25 mm, and most preferably from 100 to 1,000 N/25 mm.

The breaking strength when the metal material A and the metal material B are connected using the above-described film is the tensile strength at break per film width of 25 mm, measured under the conditions described in the Examples section.

### <<Film production method>>

There are no particular limitations on the method for producing the film including a layer containing a thermoplastic resin as a main component. For example, the film may be obtained by heating and polymerizing a monomer or oligomer of a bifunctional epoxy compound to obtain a resin composition, adding a solvent to the obtained resin composition as necessary, coating onto a release film or the like, then curing and drying, and applying pressure if necessary. Further, the polymerization reaction may be carried out after the release film is coated, after the film is obtained, or by a combination thereof.

### [Metal material connecting method]

The method for producing a connecting body according to the present embodiment includes a step of butting a cross section B of a flat plate-like metal material B against a cross section A of a flat plate-like metal material A, covering at least a part of an opposing portion, which is a region spanning both an end edge portion A of the metal material A and an end edge portion B of the metal material B, with a film including a layer containing a thermoplastic resin as a main component, and melting and solidifying the film to connect the metal material B with the metal material A. By melting and solidifying the film, the film and the metal material A and the film and the metal material B are joined, respectively, thereby connecting the metal material A and the metal material B.

The metal material and the film are the same as those constituting the connecting body, and thus a description thereof will be omitted here.

### <Film melting and solidification>

The method of melting the film is not particularly limited as long as the method can heat and melt the film. Specifically, the melting is performed by at least one method selected from the group consisting of contact heating, hot air heating, hot pressing, impulse heater heating, hot plate welding, infrared heating, ultrasonic welding, vibration welding, and high frequency induction welding. Among these, melting using an impulse heater or hot pressing is preferable from the viewpoint of ease of production and shortening of the process.

In the case of hot pressing, the heating and pressurization are more preferably performed at from 100°C to 400°C and 0.001 to 20 MPaG.

The heating conditions are further preferably from 100°C to 300°C, still further preferably from 120°C to 250°C, and most preferably from 150°C to 220°C. By heating at from 100°C to 400°C, the film is efficiently deformed and melted, and effectively wets and spreads onto the joining face between the film and the metal material A and the joining face between the film and the metal material B, resulting in a high connecting force.

The pressurization conditions are preferably from 0.001 to 20 MPaG, more preferably from 0.005 to 10 MPaG, and most preferably from 0.01 to 5 MPaG. By applying a pressure of from 0.001 to 20 MPaG, the film is efficiently deformed and effectively wetted and spread, so that a high connecting force can be obtained.

By melting and solidifying the film, the film and metal material A and the film and metal material B are joined, respectively, and so the metal material A and the metal material B are connected.

In the case of ultrasonic welding, the transmission frequency is preferably from 10 to 70 kHz, and more preferably from 15 to 40 kHz.

From the viewpoint of adhesiveness and appearance, the ultrasonic wave application time is preferably from 0.1 to 3 seconds, and more preferably from 0.2 to 2 seconds.

In the case of applying pressure during the application of ultrasonic waves, the applied force is preferably from 0.01 to 20 MPaG, more preferably from 0.1 to 10 MPaG, and further preferably from 0.2 to 5 MPaG. In such a pressure range, the film deforms efficiently, and wets and spreads effectively on the adhesion face, and so a high adhesive force can be obtained.

In the case of high frequency induction welding, the output may be in the range of from 100 to 5,000 W. The oscillation time may be adjusted depending on the size and type of the resin base material, but is, for example, preferably from 1.0 to 10.0 seconds, and more preferably from 1.5 to 8.0 seconds.

Examples of methods for solidifying the melted film include a method of allowing the film to cool at ordinary temperature or a method of using a cooling device to cool the film. Note that "ordinary temperature" means general room temperature within the range of 5°C to 30°C. Among the above methods, from the viewpoint of ease of production, a method of cooling at ordinary temperature is preferred.

As used herein, "solidification" means a solid at ordinary temperature, that is, the substance has no fluidity at 23°C without pressurization. However, the film after solidification may have tackiness.

### Examples

Next, specific examples of the present invention will be described, but the present invention is not particularly limited to these examples.

### <Metal material A and metal material B>

As the metal material A and the metal material B, C1100 (tough pitch copper) having a width of 25 mm, a length of 100 mm, and a thickness of 0.1 mm was prepared.

### <Weight average molecular weight, heat of fusion, and epoxy equivalent weight of thermoplastic epoxy resin and phenoxy resin>

The weight average molecular weight, the heat of fusion, and the epoxy equivalent weight of the thermoplastic epoxy resin and the phenoxy resin were determined as follows.

### (Weight average molecular weight)

The thermoplastic epoxy resin or phenoxy resin was dissolved in tetrahydrofuran, and the measurement was carried out using a Prominence 501 (manufactured by Showa Science Co., Ltd., Detector: Shodex (registered trademark) RI-501 (manufactured by Showa Denko Co., Ltd.)) under the following conditions.
Column: LF-804 × 2, manufactured by Showa Denko Co., Ltd.
Column temperature: 40°C
Sample: 0.4% by mass solution of resin in tetrahydrofuran
Flow rate: 1 ml/min
Eluent: tetrahydrofuran
Calibration method: conversion based on standard polystyrene

### (Heat of fusion)

2 to 10 mg of the thermoplastic epoxy resin or phenoxy resin was weighed, placed in an aluminum pan, and heated from 23°C to 200°C at 10 °C/min using a DSC (DSC8231, manufactured by Rigaku Co., Ltd.) to obtain a DSC curve. The heat of fusion was calculated from the area of the endothermic peak during melting determined from the DSC curve and the weighed value.

### (Epoxy equivalent weight)

The epoxy equivalent weight was measured in accordance with JIS K-7236:2001 and converted into a value as resin solid content. In the case of a simple mixture that does not involve a reaction, the epoxy equivalent weight was calculated from the epoxy equivalent weight and content of each component.

### <Example 1>

### (Film P-1)

A reaction apparatus equipped with a stirrer, a reflux condenser, a gas inlet pipe, and a thermometer was charged with 1.0 equivalents (203 g) of jER (registered trademark) 1007 (manufactured by Mitsubishi Chemical Corporation, bisphenol A type epoxy resin, weight average molecular weight approximately 10,000), 1.0 equivalents (12.5 g) of bisphenol S, 2.4 g of triphenylphosphine, and 1,000 g of methyl ethyl ketone, and the temperature was raised to 100°C with stirring under a nitrogen gas atmosphere. Dissolution was visually confirmed, and the mixture was cooled to 40°C to obtain a resin composition having a solid content of about 20% by mass. The solvent was removed from the mixture to give a solid. A non-pressure-sensitive adhesive fluororesin film (Nitoflon (registered trademark) No. 900UL, manufactured by Nitto Denko Corporation) was placed on the upper and lower plates of a press machine, and the solid was placed on the non-pressure-sensitive adhesive fluororesin film on the lower plate. The press machine was then heated to 160°C, and the resin composition or phenoxy resin was heated and compressed for 2 hours to obtain a solid joining agent (P-1) in the form of a film having a solid content of 100% by mass and a thickness of 100 µm. The weight average molecular weight was approximately 37,000. The epoxy equivalent weight was equal to or higher than the detection limit (that is, almost no epoxy groups were present). No heat of fusion peak was detected by DSC, confirming that the obtained solid joining agent was amorphous.

### (Connecting body)

The cross section B of the metal material B was butted against the cross section A of the metal material A, the opposing portion between the end edge portion A of the metal material A and the end edge portion B of the metal material B was covered along the width direction (25 mm) on each of the front and back sides with the film P-1 cut to a size of 20 × 25 mm, and the resulting body was placed on a hot plate set to 200°C with metal materials facing down. A 3 × 3 cm glass plate was placed on top of the film P-1 covering the opposing portion, a 2 kg weight was placed on the glass plate, and welding was performed for 1 minute. After the welding, the glass plate and the weight were removed, and the film P-1 was cooled to room temperature. After cooling, the body was flipped over on the hot plate set to 200°C, a 3 × 3 cm glass plate was again placed on top of the film P-1 covering the opposing portion, the 2 kg weight was placed on the glass plate, and welding was performed for 1 minute to produce a connecting body.

### <Example 2>

### (Film P-2)

A reaction apparatus equipped with a stirrer, a reflux condenser, a gas inlet pipe, and a thermometer was charged with 20 g of Phenotote (registered trademark) YP-50S (manufactured by Nippon Steel Chemical & Material Co., Ltd., phenoxy resin, weight average molecular weight approximately 50,000) and 80g of cyclohexanone, the temperature was raised to 60°C with stirring, dissolution was visually confirmed, and the mixture was cooled to 40°C to obtain a resin composition having a solid content of about 20% by mass. The resin composition was coated on a release film and dried at 120°C for 30 minutes to obtain a film P-2 having a solid content of 100% by mass and a thickness of 100 µm. The epoxy equivalent weight was equal to or higher than the detection limit (that is, almost no epoxy groups were present). No heat of fusion peak was detected by DSC, confirming that the obtained solid joining agent was amorphous.

### (Connecting body)

A connecting body was produced in the same manner as in Example 1 except that P-2 was used as the film.

### <Example 3>

### (Film P-3)

A reaction apparatus equipped with a stirrer, a reflux condenser, a gas inlet pipe, and a thermometer was charged with 20 g of Phenotote (registered trademark) YPS-007A (manufactured by Nippon Steel Chemical & Material Co., Ltd., phenoxy resin, weight average molecular weight approximately 42,000) and 80g of cyclohexanone, the temperature was raised to 60°C with stirring, dissolution was visually confirmed, and the mixture was cooled to 40°C to obtain a resin composition having a solid content of about 20% by mass. The resin composition was coated on a release film and dried at 120°C for 30 minutes to obtain a film P-3 having a solid content of 100% by mass and a thickness of 100 µm. The epoxy equivalent weight was equal to or higher than the detection limit (that is, almost no epoxy groups were present). No heat of fusion peak was detected by DSC, confirming that the obtained solid joining agent was amorphous.

### (Connecting body)

A connecting body was produced in the same manner as in Example 1 except that P-3 was used as the film.

### <Example 4>

### (Connecting body)

A connecting body was produced in the same manner as in Example 1 except that a PET film (thickness 25 µm) was superposed on the upper portion of the solid joining agent P-1.

### <Comparative Example 1>

### (Connecting body)

A connecting body was produced by butting the cross section B of the metal material B against the cross section A of the metal material A, covering the opposing portion between the end edge portion A of the metal material A and the end edge portion B of the metal material B along the width direction (25 mm) on each of the front and back sides with a pressure-sensitive adhesive tape (Sekisui Cellotape (registered trademark) No. 252, manufactured by Sekisui Chemical Co., Ltd., thickness 50 µm before production of connecting body) cut to a size of 20 × 25 mm, and pressing closely together to adhere.

### <Comparative Example 2>

### (Connecting body)

A connecting body was produced in the same manner as in Example 1, except that a crystalline olefin-based hot melt adhesive film (Elphan (registered trademark) NT-120, manufactured by Nihon Matai Co., Ltd., thickness 80 µm before production of connecting body) was used as the film, and the temperature of the hot plate was set to 150°C. The heat of fusion peak in DSC was 60 J/g.

### <Comparative Example 3>

### (Connecting body)

A connecting body was produced in the same manner as in Comparative Example 1, except that a heat-resistant pressure-sensitive adhesive tape (polyimide tape PB416-20-30, manufactured by As One Corporation) cut to a size of 20 × 25 mm was used as the pressure-sensitive adhesive tape.

### [Breaking strength measurement_Tensile test]

The tensile strength of the connecting bodies obtained in Examples 1 to 4 and Comparative Examples 1 to 3 was measured. The measurement conditions were as follows: a distance between grips of 13 cm, and a pulling speed of 5 mm/min using universal testing machine Autograph AG-X Plus manufactured by Shimadzu Corporation. The measurement results (breaking strength) are shown in Table 1.

The measurement was performed under the following conditions: "ordinary temperature: 23°C", "80°C hot", and "immersed in ethylene glycol". In Table 1, the values measured under the "80°C hot" condition are values measured in an 80°C atmosphere. In Table 1, the values measured under the "immersed in ethylene glycol" condition are values measured at ordinary temperature after the following procedures: immersing in ethylene glycol at 40°C for 5 days, removing, immersing in water for 5 seconds, photographing the external appearance after wiping off the ethylene glycol, and allowing to stand for 20 to 30 minutes.

### [Line contamination]

After the tensile test, the connecting body was observed as to whether the pressure-sensitive adhesion face was exposed on the surface. If the pressure-sensitive adhesion face is exposed on the surface, the connecting body may contaminate the line, and so the connecting bodies having exposure of the pressure-sensitive adhesion face were evaluated as "fail" (shown as a "x" in Table 1), and those without exposure of the pressure-sensitive adhesion face were evaluated as "pass" (shown as a "○" in Table 1). The evaluation results are shown in Table 1.

**[Table 1]**

| | | **Example 1** | **Example 2** | **Example 3** | **Example 4** |
|---|---|---|---|---|---|
| **Film properties** | **Form** | **Film** | **Film** | **Film** | **Bilayer film** |
| | **Resin main component** | **Thermoplastic epoxy resin** | **Phenoxy resin** | **Phenoxy resin** | **Thermoplastic epoxy resin** |
| | **Weight average molecular weight** | **37000** | **50000** | **42000** | **37000** |
| | **Heat of fusion (J/g)** | **0** | **0** | **0** | **0** |
| | **Epoxy equivalent weight (g/eq)** | **Equal to or higher than detection limit** | **Equal to or higher than detection limit** | **Equal to or higher than detection limit** | **Equal to or higher than detection limit** |
| | **Thickness** | **100 µm** | **100 µm** | **100 µm** | **125 µm (thermoplastic epoxy resin + PET 25 µm)** |
| **Breaking strength (N/25 mm)** | **Ordinary temperature** | **288** | **149** | **169** | **227** |
| | **80°C hot** | **68** | **57** | **65** | **88** |
| | **Immersed in ethylene glycol** | **69** | **82** | **76** | **99** |
| **Line contamination** | | **○** | **○** | **○** | **○** |

| | | **Comparative Example 1** | **Comparative Example 2** | **Comparative Example 3** |
|---|---|---|---|---|
| | **Form** | **Adhesive tape** | **Hot melt adhesive** | **Adhesive tape** |
| | **Weight average molecular weight** | **Unmeasurable** | **Unmeasurable** | **Unmeasurable** |
| | **Heat of fusion (J/g)** | **Unmeasurable** | **60** | **Unmeasurable** |
| | **Epoxy equivalent weight (g/eq)** | **Unmeasurable** | **Unmeasurable** | **Unmeasurable** |
| | **Thickness** | **50 µm** | **80 µm** | **50 µm** |
| **Breaking strength (N/25 mm)** | **Ordinary temperature** | **229** | **53** | **139** |
| | **80°C hot** | **12** | **44** | **95** |
| | **Immersed in ethylene glycol** | **21** | **0** | **68** |
| **Line contamination** | | **×** | **○** | **×** |

### Industrial Applicability

The present invention can be preferably used in applications such as, for example, connecting frame materials in an LED lead frame production line, or connecting substrate materials in a flexible printed circuit board production line, but is not particularly limited to these examples.

### Reference Signs List

1 metal material A
2 metal material B
3 film (film constituting connecting body)
4 abutting face
5 cross section A
6 cross section B
7 end edge portion A
8 end edge portion B
9 opposing portion

## Claims

1. A metal material connecting body, wherein a flat plate-like metal material B is connected with a flat plate-like metal material A by butting a cross section B of the metal material B against a cross section A of the metal material A, and covering at least a part of an opposing portion, which is a region spanning both an end edge portion A of the metal material A and an end edge portion B of the metal material B, with a film comprising a layer containing a thermoplastic resin as a main component, wherein
the film is a film that has undergone melting and solidification at the opposing portion.

2. The metal material connecting body according to claim 1, wherein the metal material A and the metal material B are each at least one selected from the group consisting of a metal plate having a thickness of 1 mm or less and a metal foil having a thickness of 1 mm or less.

3. The metal material connecting body according to claim 1, wherein the metal material A and the metal material B each have a band-like shape, and the metal material A and the metal material B are butted against each other so as to be continuous in the longitudinal direction.

4. The metal material connecting body according to claim 3, wherein the metal material A and the metal material B are roll materials obtained by winding at least one material selected from the group consisting of a metal plate and a metal foil into a roll shape.

5. The metal material connecting body according to claim 1, wherein the connecting body is formed by performing the covering at both a flat surface portion on a front side of each of the metal material A and the metal material B and a flat surface portion on a back side of each of the metal material A and the metal material B.

6. The metal material connecting body according to claim 1, wherein the thermoplastic resin is an amorphous thermoplastic resin.

7. The metal material connecting body according to claim 6, wherein the amorphous thermoplastic resin is at least one selected from the group consisting of a thermoplastic epoxy resin and a phenoxy resin.

8. The metal material connecting body according to claim 7, wherein the amorphous thermoplastic resin is an amorphous thermoplastic resin having an epoxy equivalent weight of 1,600 or more, or is an amorphous thermoplastic resin that does not contain an epoxy group.

9. The metal material connecting body according to claim 1, wherein the film has a thickness of from 10 µm to 3 mm.

10. The metal material connecting body according to claim 1, wherein
the film has a pressure-sensitive adhesion object on a face covering the opposing portion, and
the pressure-sensitive adhesion object performs a function of temporarily fixing of the film, and does not perform an adhesion function.

11. A metal material connecting method comprising: butting a cross section B of a flat plate-like metal material B against a cross section A of a flat plate-like metal material A, covering at least a part of an opposing portion, which is a region spanning both an end edge portion A of the metal material A and an end edge portion B of the metal material B, with a film comprising a layer containing a thermoplastic resin as a main component, and melting and solidifying the film to connect the metal material B with the metal material A.
